# EUROPEAN PATENT APPLICATION

(11) **EP 4 838 602 A1**
(43) Date of publication of application: **11.11.2026**
(21) Application number: 26175769.4
(22) Date of filing: 30.04.2026
(51) Int. Cl.: H01M 10/04, H01M 50/15, H01M 50/103, H01M 50/188, H01M 50/553

(54) **METHOD FOR MANUFACTURING LID ASSEMBLY, LID ASSEMBLY, AND CELL**

(30) Priority: 09.05.2025 CN 202510596516; 29.08.2025 CN 202511236158
(71) Applicant: AESC Japan Ltd., Yokohama-shi, Kanagawa 220-0012 (JP)
(72) Inventor: LU, Jiangjia, Jiangyin City, Wuxi City (CN)
(74) Representative: Becker, Eberhard

(57) **Abstract**

A method for manufacturing a lid assembly (1000), a lid assembly (1000), and a cell are provided. The method for manufacturing the lid assembly (1000) includes: a hole-forming step: providing a plate member (4000) and forming a through-hole (4100) extending through a first surface (112) and a second surface (113) of the plate member (4000); a punching step: compressing an edge of the through-hole (4100) from the second surface (113) toward the first surface (112) to form a cylindrical protrusion (4200; and a splitting step: stamping a portion of the cylindrical protrusion (4200) adjacent to a cylindrical inner wall (4210) from an annular end surface (4240) toward the second surface (113) to form a second fixing portion (130) which is connected to a first fixing portion (120) formed by a portion of the cylindrical protrusion (4200) adjacent to the cylindrical outer wall (4220).

## Description

### BACKGROUND

### Technical Field

The present disclosure relates to the field of battery technology, and in particular to a method for manufacturing a lid assembly, a lid assembly, and a cell.

### Related Art

In the development of battery technology, in addition to improving the performance of cells, safety considerations are likewise matters that cannot be disregarded. If the safety of the cells cannot be ensured, the cells cannot be put into use. Accordingly, enhancing the safety performance of the cells constitutes an urgent technical problem in the field of battery technology that remains to be resolved.

### SUMMARY

In view of this, the purpose of the present disclosure is to propose a method for manufacturing a lid assembly, a lid assembly, and a cell, so as to at least partially solve the problem of how to enhance the safety performance of cells.

Based on the above purpose, a first aspect of the present disclosure provides a method for manufacturing a lid assembly, including:
Hole-forming step: providing a plate member and forming, in the plate member, a through-hole, wherein the through-hole extends, along a thickness direction of the plate member, through a first surface and a second surface of the plate member;
Punching step: pressing an edge of the through-hole in a direction from the second surface toward the first surface to form a cylindrical protrusion protruding from the first surface, wherein the cylindrical protrusion includes a cylindrical inner wall, a cylindrical outer wall, and an annular end surface respectively connected to the cylindrical inner wall and the cylindrical outer wall;
Splitting step: stamping, from the annular end surface toward the second surface, a portion of the cylindrical protrusion adjacent to the cylindrical inner wall so as to form a second fixing portion that protrudes beyond the second surface, wherein a portion of the cylindrical protrusion adjacent to the cylindrical outer wall forms a first fixing portion, and an inner wall of the first fixing portion and an inner wall of the second fixing portion are connected by a transition portion.

Optionally, the cylindrical outer wall is connected to the first surface and forms a first connecting portion;
The splitting step further includes:
When stamping the portion of the cylindrical protrusion adjacent to the cylindrical inner wall, supporting, on the second surface, a location surrounding the cylindrical protrusion so as to form, on the second surface, a material-extrusion groove, wherein in the thickness direction of the plate member, a projection of the first connecting portion onto the second surface is positioned within the material-extrusion groove.

Optionally, a transition rounded corner is formed between the cylindrical inner wall and the second surface;
After the punching step and before the splitting step, the method further includes:
Pressing step: stamping the annular end surface toward the second surface, so as to reduce a radius of the transition rounded corner.

Optionally, the pressing step includes:
When stamping the annular end surface toward the second surface, uniformly supporting the second surface, so as to make the second surface to be a flat surface.

The splitting step further includes:
When stamping the portion of the cylindrical protrusion adjacent to the cylindrical inner wall, supporting the position of the second surface surrounding the cylindrical protrusion, so as to form a material-extrusion groove on the second surface.

Optionally, the transition rounded corner is formed between the cylindrical inner wall and the second surface.

After the punching step, and before the splitting step, the method further includes:
Pressing step, supporting the position of the second surface surrounding the cylindrical protrusion, stamping the annular end surface toward the second surface, so as to reduce the radius of the transition rounded corner while forming the material-extrusion groove on the second surface.

Optionally, the splitting step includes:
When stamping the portion of the cylindrical protrusion adjacent to the cylindrical inner wall, filling and supporting the material-extrusion groove through a mold matching the second surface.

Optionally, the splitting step includes:
When stamping the portion of the cylindrical protrusion adjacent to the cylindrical inner wall, forming a first anti-rotation structure on an inner surface of the first fixing portion.

Optionally, the first fixing portion includes a first end away from the plate member. The method for manufacturing the lid assembly further includes:
Compressing the first end toward the second surface, so as to form the first anti-rotation structure on the inner surface of the first fixing portion.

Optionally, the punching step includes:
Stamping the edge of the through-hole at least twice in a direction from the second surface toward the first surface, so as to gradually increase a diameter of the through-hole and form the cylindrical protrusion protruding from the first surface.

Optionally, the first fixing portion includes the first end away from the plate member. The method for manufacturing the lid assembly further includes:
Compressing the first end toward the second surface, so as to bend the first end toward a centerline of the first fixing portion.

Optionally, the first fixing portion and the second fixing portion define an accommodating space. The method for manufacturing the lid assembly further includes:
Fixing a terminal fitted with a sealing portion in the accommodating space.

Based on the same inventive concept, a second aspect of the present disclosure provides the lid assembly, including the lid, wherein the lid includes a lid base, the first fixing portion, and the second fixing portion. The lid base includes the first surface and the second surface disposed opposite to each other along the first direction. The first fixing portion extends from the first surface at least along the first direction away from the lid base. The second fixing portion extends from the second surface along the first direction and a second direction away from the lid base. The first fixing portion includes a first inner wall. The second fixing portion includes a second inner wall. The first inner wall and the second inner wall and the transition portion connecting the first inner wall and the second inner wall form the accommodating space. The first direction is a centerline direction of the accommodating space, and the second direction is perpendicular to the first direction.

Optionally, the transition portion includes an inclined surface, an arc surface, or a stepped surface connected to the first inner wall and the second inner wall respectively.

Optionally, the transition portion includes an annular inclined surface, and the second inner wall includes an annular plane disposed parallel to the second surface. An angle between the annular inclined surface and the annular plane is α, 45°≤α<90°.

Optionally, along the second direction, the first fixing portion includes a first outer side wall away from the accommodating space. The second fixing portion includes a second outer side wall away from the accommodating space. The first outer side wall is connected to the first surface and forms the first connecting portion. The second outer side wall is connected to the second surface and forms a second connecting portion. Along the second direction, a straight-line distance from the first connecting portion to a centerline of the accommodating space is L₁, and a straight-line distance from the second connecting portion to the centerline of the accommodating space is L₂, L₂<L₁.

Optionally, the second surface is provided with the material-extrusion groove surrounding the second fixing portion. Along the second direction, the material-extrusion groove extends to the second connecting portion.

Optionally, along the first direction, the projection of the first connecting portion on the second surface is located within the material-extrusion groove.

Optionally, the first fixing portion includes the first end away from the lid base, and a portion of the first fixing portion adjacent to the first end extends in the first direction.

Optionally, the first fixing portion, the lid base, and the second fixing portion are integrally formed and connected.

Optionally, the lid assembly includes the terminal and an insulating and sealing structure, and the lid and the terminal are connected through the insulating and sealing structure. The insulating and sealing structure includes an upper insulating portion and the sealing portion. The upper insulating portion and the sealing portion are connected within the accommodating space and completely fill the accommodating space.

Optionally, the first fixing portion is provided with the first anti-rotation structure, and the upper insulating portion is formed with a first insulating and anti-rotation structure. One of the first anti-rotation structure and the first insulating and anti-rotation structure is a groove structure, and the other is a protrusion structure fitted within the groove structure; and/or,

The terminal is provided with a second anti-rotation structure, and the upper insulating portion is formed with a second insulating and anti-rotation structure. One of the second anti-rotation structure and the second insulating and anti-rotation structure is the groove structure, and the other is the protrusion structure fitted within the groove structure.

Based on the same inventive concept, a third aspect of the present disclosure provides a cell, which includes a housing, an electrode assembly, and the lid assembly as described in the first aspect, wherein the lid assembly is connected to the housing, and the electrode assembly is disposed within a space defined by the lid assembly and the housing.

As is apparent from the foregoing, the method for manufacturing the lid assembly, the lid assembly, and the cell provided in the present disclosure, by performing the hole-forming step, the punching step, and the splitting step, enables a planar plate member to be formed into the lid having the lid base, the first fixing portion, and the second fixing portion. Because the lid base, the first fixing portion, and the second fixing portion are integrally formed and connected, the connection strength among them is enhanced, thereby reducing the risk of fracture at the junction between the first fixing portion and the lid base and at the junction between the second fixing portion and the lid base.

Additionally, the lid is further provided with the transition portion, such that a relatively smooth transition is formed between the inner wall of the first fixing portion and the inner wall of the second fixing portion via the transition portion. The transition portion also performs a material-compensation function, thereby enhancing the structural strength at the junction between the second fixing portion and the lid base and improving the connection reliability between the second fixing portion and the lid base.

### BRIEF DESCRIPTION OF THE DRAWINGS

In order to more clearly illustrate the technical solutions in the present disclosure or the related art, the drawings required for use in the description of the embodiments or the related art will be briefly introduced below. Clearly, the drawings described below are merely embodiments of the present disclosure, and for those of ordinary skill in the art, other drawings may also be obtained based on these drawings without any creative effort.
FIG. 1 is a partial cross-sectional view of a cell having a first structure according to an embodiment of the present disclosure.
FIG. 2 is a partial top view of a lid assembly having a second structure according to an embodiment of the present disclosure.
FIG. 3 is a cross-sectional view taken along line A-A in FIG. 2.
FIG. 4 is an enlarged view of a portion B in FIG. 3.
FIG. 5 is a schematic flowchart of a method for manufacturing a lid assembly according to an embodiment of the present disclosure.
FIG. 6A is a partial cross-sectional view of a hole-forming step of a method for manufacturing a lid assembly according to an embodiment of the present disclosure.
FIG. 6B is a partial cross-sectional view of a first compression of a plate member to form a cylindrical protrusion in a punching step of a method for manufacturing a lid assembly according to an embodiment of the present disclosure.
FIG. 6C is a partial cross-sectional view of a second compression of a plate member to form a cylindrical protrusion in a punching step of a method for manufacturing a lid assembly according to an embodiment of the present disclosure.
FIG. 6D is a partial cross-sectional view of a first pressing step of a method for manufacturing a lid assembly according to an embodiment of the present disclosure.
FIG. 6E is a partial cross-sectional view of a second pressing step of a method for manufacturing a lid assembly according to an embodiment of the present disclosure.
FIG. 6F is a partial cross-sectional view of a first splitting step of a method for manufacturing a lid assembly according to an embodiment of the present disclosure.
FIG. 6G is a partial cross-sectional view of a second splitting step of a method for manufacturing a lid assembly according to an embodiment of the present disclosure.
FIG. 6H is a partial cross-sectional view of a first anti-rotation structure formed in a second splitting step of a method for manufacturing a lid assembly according to an embodiment of the present disclosure.
FIG. 6I is a partial cross-sectional view of a first compression of a first end in a method for manufacturing a lid assembly according to an embodiment of the present disclosure.
FIG. 6J is a partial cross-sectional view of a second compression of a first end in a method for manufacturing a lid assembly according to an embodiment of the present disclosure.
FIG. 6K is a partial cross-sectional view of a final compression of a first end in a method for manufacturing a lid assembly according to an embodiment of the present disclosure.
FIG. 6L is a partial cross-sectional view of assembling a terminal on a lid in a method for manufacturing a lid assembly according to an embodiment of the present disclosure.
FIG. 7 is an enlarged view of a portion B in FIG. 5 of a lid assembly having a third structure according to an embodiment of the present disclosure.
FIG. 8 is an enlarged view of a portion C in FIG. 7.
FIG. 9 is an enlarged view of a portion C in FIG. 7 of a lid assembly having a fourth structure according to an embodiment of the present disclosure.
FIG. 10 is an enlarged view of a portion C in FIG. 7 of a lid assembly having a fifth structure according to an embodiment of the present disclosure.
FIG. 11 is a schematic view of a cell according to an embodiment of the present disclosure.

### DESCRIPTION OF THE EMBODIMENTS

For the purposes, technical solutions, and advantages of the present disclosure to be more clearly understood, the present disclosure is further described in detail below with reference to specific embodiments and the accompanying drawings.

It should be noted that, unless otherwise specifically stated, the relative arrangement of components, numerical expressions, and numerical values set forth in these embodiments do not limit the scope of the present disclosure.

At the same time, it should be understood that, for ease of description, the dimensions of the various parts shown in the drawings are not drawn according to actual proportional relationships.

The following description of at least one exemplary embodiment is merely illustrative in nature and is in no way intended as any limitation on the present disclosure or its application or use.

It should be noted that, unless otherwise defined, the technical terms or scientific terms used in the embodiments of the present disclosure shall have the ordinary meanings understood by persons with general skills in the field to which the present disclosure belongs. The terms "first," "second," and similar words used in the embodiments of the present disclosure do not indicate any order, quantity, or importance, but are merely provided to distinguish different components. Words such as "includes" or "comprises" mean that the elements or items appearing before such words encompass the elements or items listed after such words and their equivalents, without excluding other elements or items. Words such as "connected" or "coupled" are not limited to physical or mechanical connections, but may include electrical connections, whether direct or indirect. "Upper," "lower," "left," "right," and the like are used only to indicate relative positional relationships, and when the absolute position of the described object changes, the relative positional relationship may also change accordingly.

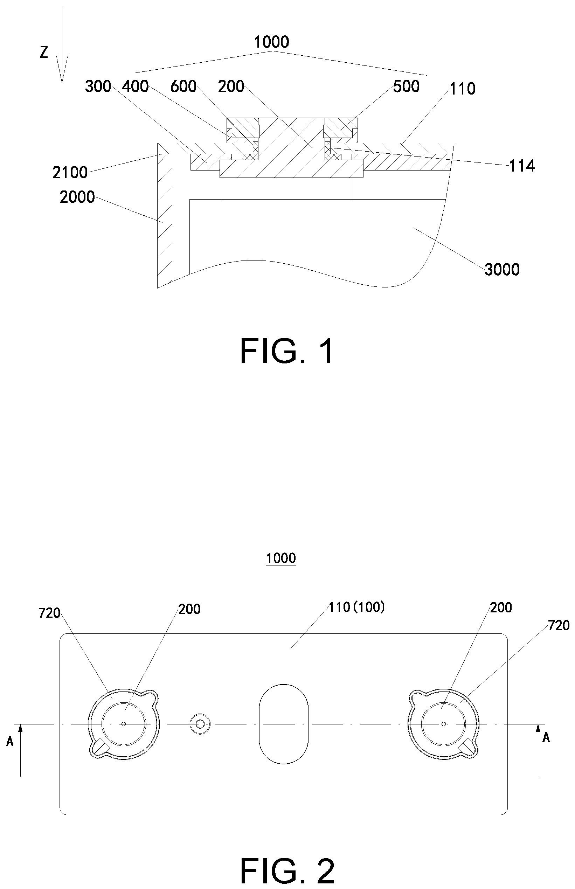

FIG. 1 shows a partial cross-sectional view of a cell having a first structure.

As shown in FIG. 1, in some embodiments, the cell includes a lid assembly 1000 and a housing 2000. The lid assembly 1000 includes a lid base 110. The lid base 110 is provided with a mounting hole 114 extending through the lid base 110 along its thickness direction (the direction Z in FIG. 1). The lid base 110 is sealingly joined to an opening end 2100 of the housing 2000, so that the lid base 110 and the housing 2000 define a space for accommodating an electrode assembly 3000. A lower insulating member 300 is connected to a side of the lid base 110 adjacent to the electrode assembly 3000, and an upper insulating member 400 is connected to a side of the lid base 110 away from the electrode assembly 3000. The lid assembly 1000 further includes a terminal 200. The terminal 200 is fitted with a sealing ring 600, and passes through the lower insulating member 300, the lid base 110, and the upper insulating member 400. An end of the terminal 200 away from the electrode assembly 3000 extends beyond the upper insulating member 400 and is riveted to a riveting block 500. The terminal 200 and the lid base 110 compress the sealing ring 600, so as to seal a space between the terminal 200 and the lid base 110 through the sealing ring 600, and to insulate the terminal 200 from the lid base 110 through the upper insulating member 400 and the lower insulating member 300.

In view of the foregoing, in the present embodiment, in order to achieve an insulated, sealed connection between the terminal 200 and the lid base 110, at least the following components are required: the lower insulating member 300, the sealing ring 600, the upper insulating member 400, and the riveting block 500. Consequently, the number of parts is relatively large and the material costs are high. In addition, during assembly of the terminal 200 on the lid base 110, further operations such as adhesive bonding (e.g., joining the lower insulating member 300 to the lid base 110) and riveting (e.g., joining the riveting block 500 to the terminal 200) are required, rendering the assembly process relatively complex and the assembly efficiency relatively low.

In order to solve the above problems, the embodiments of the present disclosure provide the lid assembly 1000 having other structures.

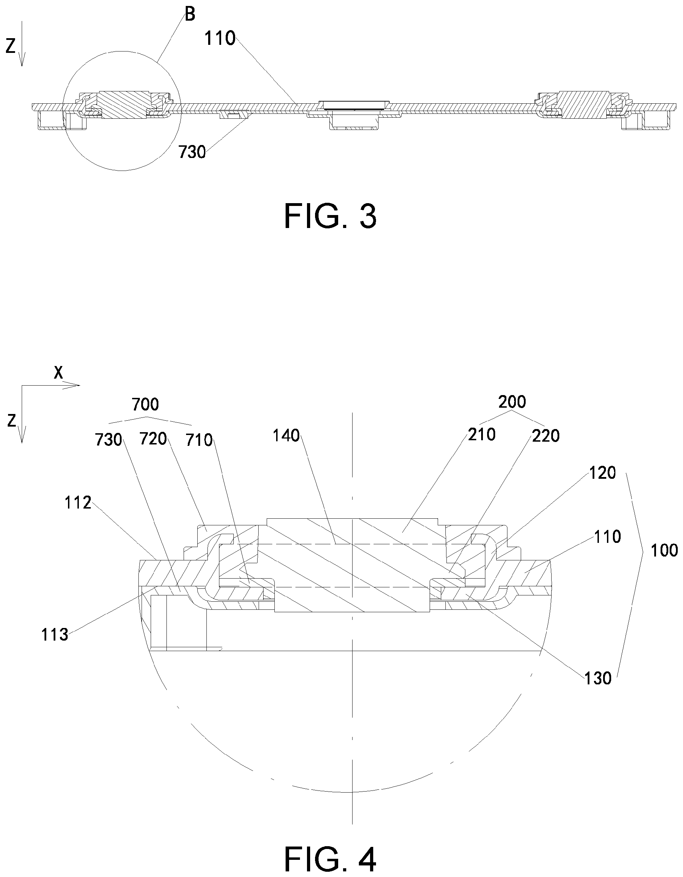

FIG. 2 shows a partial top view of the lid assembly 1000 having a second structure. FIG. 3 shows a cross-sectional view taken along line A-A in FIG. 2. FIG. 4 shows an enlarged view of a portion B in FIG. 3.

As shown in FIG. 2 and FIG. 3, in some embodiments, the lid assembly 1000 includes the lid 100, the terminal 200, and an insulating and sealing structure 700. The lid 100 and the terminal 200 are connected through the insulating and sealing structure 700. Exemplarily, the terminal 200 may include a positive terminal and a negative terminal. The positive terminal is configured to be electrically connected to a positive tab of the electrode assembly 3000 (the positive tab is formed by a current collector of a positive electrode sheet of the electrode assembly 3000 extending outward) to form a positive electrode of the cell. The negative terminal is configured to be electrically connected to a negative tab of the electrode assembly 3000 (the negative tab is formed by a current collector of a negative electrode sheet of the electrode assembly 3000 extending outward) to form a negative electrode of the cell.

As shown in FIG. 3 and FIG. 4, the lid 100 includes the lid base 110, a first fixing portion 120, and a second fixing portion 130. The first fixing portion 120 and the second fixing portion 130 are disposed surrounding the terminal 200. The lid base 110 includes a first surface 112 and a second surface 113 disposed opposite to each other along a first direction (the direction Z as shown in FIG. 4). The first fixing portion 120 extends from the first surface 112 at least along the first direction away from the lid base 110. The second fixing portion 130 extends from the second surface 113 at least along a second direction (the direction X as shown in FIG. 4) toward a centerline of the terminal 200. The first fixing portion 120 and the second fixing portion 130 define an accommodating space 140. The terminal 200 and the insulating and sealing structure 700 are at least partially located in the accommodating space 140. The first direction is a centerline direction of the terminal 200, and the second direction is perpendicular to the first direction.

Exemplarily, when the lid assembly 1000 is applied to a cell, the second surface 113 is located adjacent to the electrode assembly 3000.

Exemplarily, the insulating and sealing structure 700 includes a lower insulating portion 730 connected to a side of the lid 100 adjacent to the second surface 113.

Exemplarily, the first fixing portion 120, the second fixing portion 130, and the lid base 110 may be integrally formed and connected; or, the first fixing portion 120 and the second fixing portion 130 may be integrally formed and connected and welded to the lid base 110.

It should be noted that the first fixing portion 120 extends from the first surface 112 at least along the first direction away from the lid base 110, which does not mean that an end of the first fixing portion 120 adjacent to the lid base 110 is disposed on the first surface 112, but only means that the first fixing portion 120 protrudes from the lid base 110 from the first surface 112, and the first fixing portion 120 may also extend into a space between the first surface 112 and the second surface 113. Similarly, the second fixing portion 130 extends from the second surface 113 at least along the second direction toward the centerline of the terminal 200, which also does not mean that an end of the second fixing portion 130 adjacent to the lid base 110 is disposed on the second surface 113, and the second fixing portion 130 may also extend into the space between the first surface 112 and the second surface 113.

It can be ascertained from a comparison of FIG. 1 and FIG. 4 that, in the structure shown in FIG. 1, a middle portion of the terminal 200 has a columnar configuration, a lower end of which is required to be connected to a terminal base plate 240 having a relatively large lateral area. The terminal base plate 240 cooperates with the riveting block 500 from above and below to clamp, therebetween, the upper insulating member 400, the sealing ring 600, the lid base 110, and the lower insulating member 300, thereby forming a robust terminal assembly. However, because the terminal 200 requires provision of the terminal base plate 240 and connection to the riveting block 500, the quantity of metallic material used in the lid assembly 1000 is increased, resulting in higher material costs, and the overall weight of the lid assembly 1000 is likewise increased.

In the structure shown in FIG. 4, the terminal 200 as a whole has a generally columnar structure. The second fixing portion 130 may support the terminal 200, and the insulating and sealing structure 700 may enable the terminal 200 and the first fixing portion 120 to form a reliable connection. Compared with the structure shown in FIG. 1, the terminal base plate 240 and the riveting block 500 are omitted, reducing the amount of metallic material used for the lid assembly 1000, and helping to reduce the assembly difficulty and material cost of the lid assembly 1000.

In view of the foregoing, it can be understood that the second fixing portion 130 and the first fixing portion 120 play a significant role in ensuring a reliable connection between the terminal 200 and the lid 100. If the structural strength at the connection (hereinafter, the "second junction") between the second fixing portion 130 and the lid base 110 is insufficient, or if the structural strength at the connection (hereinafter, the "first junction") between the first fixing portion 120 and the lid base 110 is insufficient, cracks or even fractures may occur at the first junction and/or the second junction during use. Moreover, during the fabrication of the lid 100, the first fixing portion 120 or the second fixing portion 130 may readily fracture from the lid base 110, which would severely affect the yield of acceptable lids 100. When a cell employs the lid 100 in which cracks are present, owing to the reduced reliability of the connection between the terminal 200 and the lid 100, the safety performance of the cell may also be adversely affected.

In order to solve the above problems, the present embodiment provides a method for manufacturing the lid assembly 1000.

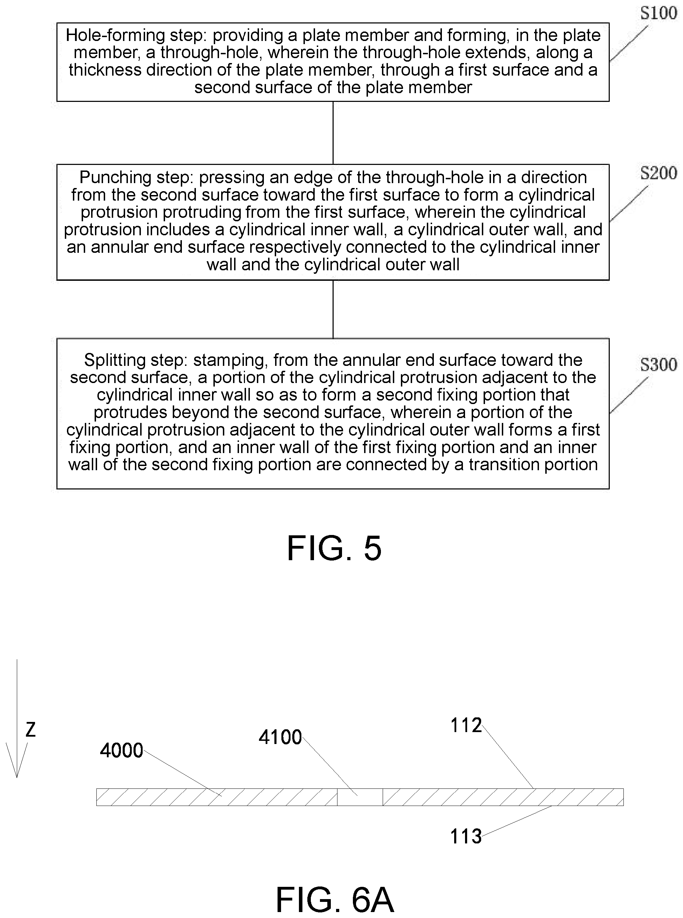

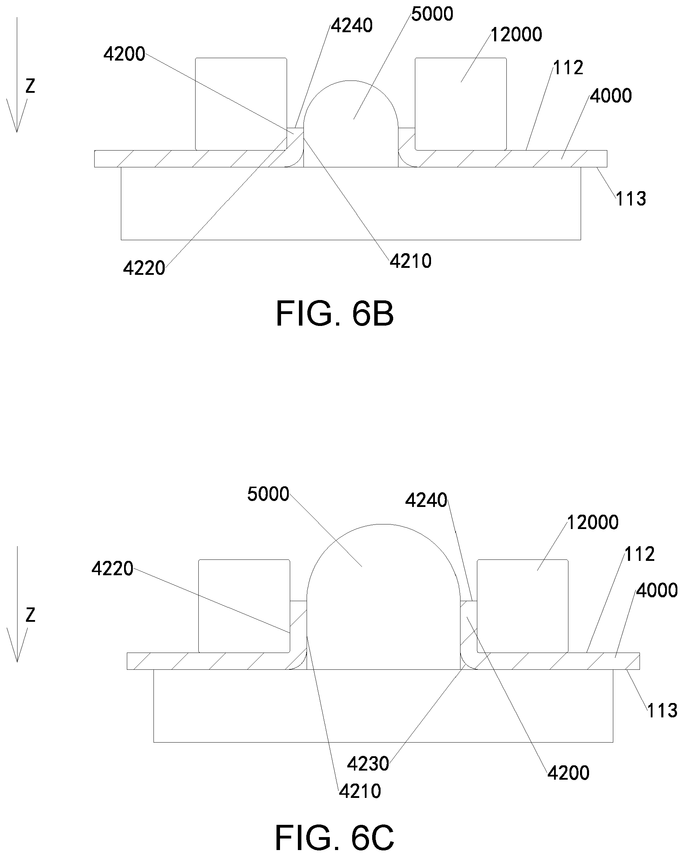

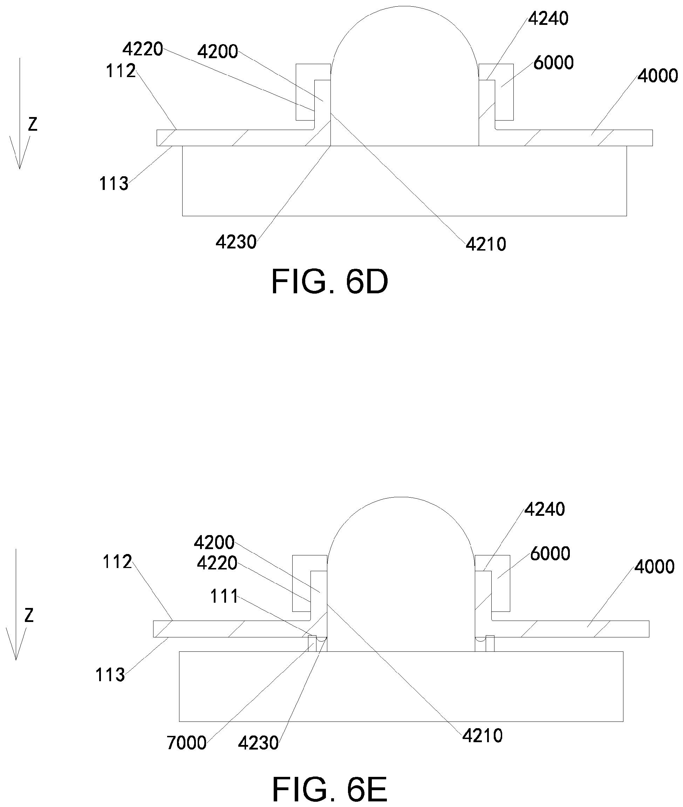

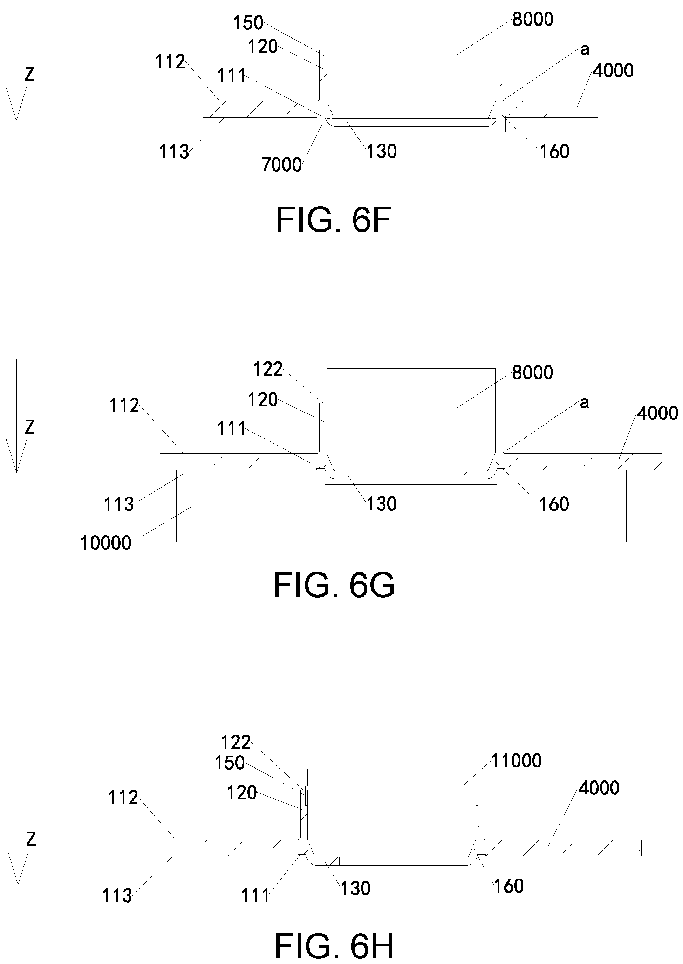

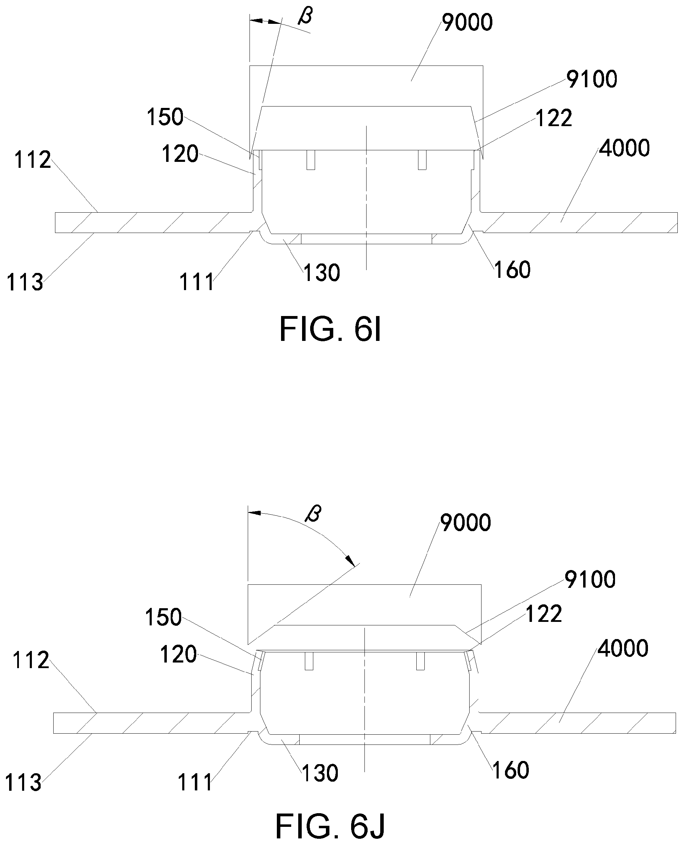

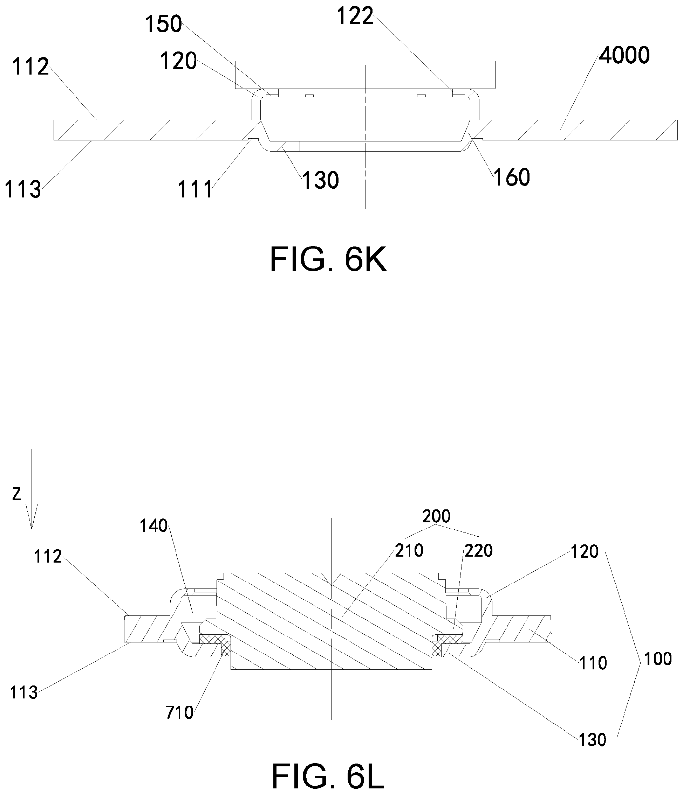

FIG. 5 shows a schematic flowchart of a method for manufacturing the lid assembly 1000 having a third structure. FIG. 6A shows a partial cross-sectional view of a hole-forming step of the method for manufacturing the lid assembly 1000 having the third structure. FIG. 6B shows a partial cross-sectional view of the method for manufacturing the lid assembly 1000 having the third structure in which a plate member 4000 is compressed for the first time in a punching step to form a cylindrical protrusion 4200. FIG. 6C shows a partial cross-sectional view of the method for manufacturing the lid assembly 1000 having the third structure in which the plate member 4000 is compressed for the second time in the punching step to form the cylindrical protrusion 4200. FIG. 6D shows a partial cross-sectional view of a first pressing step of the method for manufacturing the lid assembly 1000 having the third structure. FIG. 6E shows a partial cross-sectional view of a second pressing step of the method for manufacturing the lid assembly 1000 having the third structure. FIG. 6F shows a partial cross-sectional view of a first splitting step of the method for manufacturing the lid assembly 1000 having the third structure. FIG. 6G shows a partial cross-sectional view of a second splitting step of the method for manufacturing the lid assembly 1000 having the third structure. FIG. 6H shows a partial cross-sectional view of a first anti-rotation structure 150 formed in a second splitting step of the method for manufacturing the lid assembly 1000 having the third structure. FIG. 6I shows a partial cross-sectional view of the method for manufacturing the lid assembly 1000 having the third structure in which a first end 122 is compressed for the first time. FIG. 6J shows a partial cross-sectional view of the method for manufacturing the lid assembly 1000 having the third structure in which the first end 122 is compressed for the second time. FIG. 6K shows a partial cross-sectional view of the method for manufacturing the lid assembly 1000 having the third structure in which the first end 122 is compressed for the last time. FIG. 6L shows a partial cross-sectional view of assembling the terminal 200 on the lid 100 in the method for manufacturing the lid assembly 1000 having the third structure.

As shown in FIG. 5, the method for manufacturing the lid assembly 1000 provided by the present embodiment includes:
As shown in FIG. 6A, in step S100 (Hole-forming): The plate member 4000 is provided, and a through-hole 4100 is formed on the plate member 4000. The through-hole 4100 extends through the first surface 112 and the second surface 113 of the plate member 4000 along a thickness direction (the direction Z in FIG. 6A) of the plate member 4000.

It should be noted that the first surface 112 and the second surface 113 are two surfaces of the plate member 4000 disposed opposite to each other along the thickness direction thereof.

The through-hole 4100 is formed on the plate member 4000 by drilling, stamping, or milling, and the through-hole 4100 is provided to form the accommodating space 140.

As shown in FIG. 6A, FIG. 6B, and FIG. 6C, in step S200 (Punching): An edge of the through-hole 4100 is compressed in the direction from the second surface 113 to the first surface 112 to form the cylindrical protrusion 4200 protruding from the first surface 112. The cylindrical protrusion 4200 includes a cylindrical inner wall 4210, a cylindrical outer wall 4220, and an annular end surface 4240 connected to the cylindrical inner wall 4210 and the cylindrical outer wall 4220, respectively.

It should be noted that the cylindrical inner wall 4210 and the cylindrical outer wall 4220 are both disposed surrounding a centerline of the cylindrical protrusion 4200, and the annular end surface 4240 is an end surface of the cylindrical protrusion 4200 that is away from the second surface 113 along a thickness direction of the plate member 4000.

By pressing a wall of the through-hole 4100 toward the first surface 112, a pressed portion of the plate member 4000 is caused to bulge toward the first surface 112, thereby forming the cylindrical protrusion 4200 that protrudes from the first surface 112. Concurrently, a diameter of the through-hole 4100 increases.

The cylindrical protrusion 4200 is the structural basis for forming the first fixing portion 120 and the second fixing portion 130.

As shown in FIG. 6F and FIG. 6G, in step S300 (Splitting): A portion of the cylindrical protrusion 4200 adjacent to the cylindrical inner wall 4210 is punched in a direction from the annular end surface 4240 to the second surface 113 to form the second fixing portion 130 protruding from the second surface 113. A portion of the cylindrical protrusion 4200 adjacent to the cylindrical outer wall 4220 forms the first fixing portion 120, and an inner wall of the first fixing portion 120 and an inner wall of the second fixing portion 130 are connected through a transition portion 160.

It should be noted that the first fixing portion 120, the second fixing portion 130, and the transition portion 160 are all disposed surrounding a centerline of the through-hole 4100.

Exemplarily, in order to prevent an outer diameter of the cylindrical protrusion 4200 from deforming, during the above compression process, an annular mold may also be provided to press against the cylindrical outer wall 4220 of the cylindrical protrusion 4200.

A protruding extrusion die 8000 is provided to compress a portion of the cylindrical protrusion 4200 adjacent to the cylindrical inner wall 4210. The protruding extrusion die 8000 may be a columnar structure, and an outer diameter of the columnar structure is greater than an inner diameter of the cylindrical protrusion 4200 and less than the outer diameter of the cylindrical protrusion 4200.

After a bottom end of the protruding extrusion die 8000 abuts against the annular end surface 4240, pressure is applied to a portion of the annular end surface 4240 adjacent to the cylindrical inner wall 4210, so as to push the portion of the cylindrical protrusion 4200 adjacent to the cylindrical inner wall 4210 to move downward and change shape, until the portion protrudes from the second surface 113 and forms the second fixing portion 130 that is at least partially an annular flat plate structure.

Further, a chamfer or a groove is formed at the bottom end of the protruding extrusion die 8000, which chamfer or groove not only facilitates alignment of the protruding extrusion die 8000 with an inner bore of the cylindrical protrusion 4200, but also shapes a portion of the cylindrical protrusion 4200 that is displaced under compression, so as to form the transition portion 160 concurrently with the formation of the second fixing portion 130.

The portion of the cylindrical protrusion 4200 adjacent to the cylindrical outer wall 4220 is not compressed, and remains in its original position to form the first fixing portion 120 protruding from the first surface 112. The inner wall of the first fixing portion 120 and the inner wall of the second fixing portion 130 are connected through the transition portion 160.

By forming the transition portion 160, the occurrence of a sharp corner at the junction between the inner wall of the first fixing portion 120 and the inner wall of the second fixing portion 130 is avoided, thereby effectively preventing stress concentration at the junction that could otherwise result in fracture among the first fixing portion 120, the second fixing portion 130, and the lid base 110, and thus enhancing the reliability of the connection among these three.

Additionally, with reference to FIG. 6F, if the transition portion 160 is not provided between the inner wall of the first fixing portion 120 and the inner wall of the second fixing portion 130, a sharp right-angled structure may be formed between the foregoing two inner walls, as indicated by the dashed right-angle line between the inner wall of the first fixing portion 120 and the inner wall of the second fixing portion 130 in FIG. 6F.

When the transition portion 160 is disposed between the inner wall of the first fixing portion 120 and the inner wall of the second fixing portion 130, the two inner walls may form a relatively smooth transition via the transition portion 160. Compared with a sharp right-angled configuration, the transition portion 160 further provides a material-accumulation function, which contributes to increasing the structural strength at the junction between the second fixing portion 130 and the lid base 110, thereby improving the reliability of the connection between the second fixing portion 130 and the lid base 110.

In the present embodiment, the method for manufacturing the lid assembly is provided, wherein, by performing the hole-forming step, the punching step, and the splitting step, a platelike plate member 4000 is formed into the lid 100 having the lid base 110, the first fixing portion 120, and the second fixing portion 130. Because the lid base 110, the first fixing portion 120, and the second fixing portion 130 are integrally formed as a unitary structure, the connection strength among these three components is enhanced, thereby reducing the risk of fracture at the junction between the first fixing portion 120 and the lid base 110, as well as at the junction between the second fixing portion 130 and the lid base 110.

At the same time, the lid 100 is further provided with the transition portion 160, and the inner wall of the first fixing portion 120 and the inner wall of the second fixing portion 130 may not only form a relatively smooth transition through the transition portion 160, but the transition portion 160 also has a material-accumulation function, which helps to improve the structural strength at the junction between the second fixing portion 130 and the lid base 110, and improves the connection reliability between the second fixing portion 130 and the lid base 110.

As shown in FIG. 6F and FIG. 6G, in some embodiments, the cylindrical outer wall 4220 is connected to the first surface 112 and forms a first connecting portion a; the splitting step further includes:

When stamping the portion of the cylindrical protrusion 4200 adjacent to the cylindrical inner wall 4210, supporting a position of the second surface 113 surrounding the cylindrical protrusion 4200, so as to form a material-extrusion groove 111 on the second surface 113. Along the thickness direction of the plate member 4000, a projection of the first connecting portion a on the second surface 113 is located within the material-extrusion groove 111.

Prior to performing the splitting step, an annular material-extrusion die 7000 may be disposed on the second surface 113, with a centerline of the annular material-extrusion die 7000 coinciding with the centerline of the cylindrical protrusion 4200. By means of the annular material-extrusion die 7000, a portion of the second surface 113 surrounding the cylindrical protrusion 4200 are supported. During the process in which the protruding extrusion die 8000 presses the cylindrical protrusion 4200 downward via the annular end surface 4240, the annular material-extrusion die 7000, located at the underside of the plate member 4000, utilizes the downward extrusion force applied to the plate member 4000 to effect reverse extrusion on the second surface 113. The recessed material-extrusion groove 111 is thereby formed at the portion of the second surface 113 in contact with the annular material-extrusion die 7000, and a material originally present in the material-extrusion groove 111 is extruded toward the first connecting portion and a second connecting portion to achieve material supplementation.

It should be noted that the annular material-extrusion die 7000 may also limit an outer diameter of the second fixing portion 130, so that the second fixing portion 130 protruding from the second surface 113 is entirely located on an inner side of the cylindrical outer wall 4220 of the cylindrical protrusion 4200.

As shown in FIG. 6C, FIG. 6D, and FIG. 6E, a transition rounded corner 4230 is formed between the cylindrical inner wall 4210 and the second surface 113.

After the punching step and before the splitting step, the method further includes:
Step S400 (Pressing): stamping the annular end surface 4240 toward the second surface 113, so as to reduce a radius of the transition rounded corner 4230.

It may be understood that, after the cylindrical protrusion 4200 is formed, the second surface 113 and the cylindrical inner wall 4210 of the cylindrical protrusion 4200 naturally bend to form the transition rounded corner 4230. However, the applicant has found that when the radius of the transition rounded corner 4230 is large, there is less material at the transition rounded corner 4230, which may cause a material shortage in the second fixing portion 130 when the second fixing portion 130 is subsequently formed.

In order to avoid the above-mentioned problem, in this embodiment, the annular end surface 4240 may be pressed by an annular pressing die 6000, so that the material fills the transition rounded corner 4230, and the radius of the transition rounded corner 4230 is correspondingly reduced. On one hand, such design helps to improve the structural strength of the second fixing portion 130, and on the other hand, it is also possible to help to improve the connection strength between the second fixing portion 130 and the plate member 4000, preventing fracture at the connection between the two.

In order to prevent the outer diameter of the cylindrical protrusion 4200 from expanding during the above-mentioned pressing process, the annular pressing die 6000 needs to fit with the cylindrical outer wall 4220 of the cylindrical protrusion 4200, so as to limit the cylindrical outer wall 4220 of the cylindrical protrusion 4200.

Concurrently, in order to prevent uncontrollable deformation of the second surface 113 and the cylindrical inner wall 4210 when pressing the annular end surface 4240, a die that supports the second surface 113 and fits with the cylindrical inner wall 4210 may be disposed during the pressing process, wherein a surface of the die that fits with the cylindrical inner wall 4210 and the surface that supports the second surface 113 transition at a right angle, which on one hand prevents the inner diameter of the cylindrical protrusion 4200 from changing, and on the other hand may shape the material filling the transition rounded corner 4230, so as to reduce the radius of the transition rounded corner 4230.

As shown in FIG. 6D and FIG. 6F, in some embodiments, the pressing step includes:
When stamping the annular end surface 4240 toward the second surface 113, uniformly supporting the second surface 113, so as to make the second surface 113 to be a flat surface.

The splitting step further includes:
When stamping the portion of the cylindrical protrusion 4200 adjacent to the cylindrical inner wall 4210, supporting the position of the second surface 113 surrounding the cylindrical protrusion 4200, so as to form the material-extrusion groove 111 on the second surface 113.

In this embodiment, during the pressing step, the second surface 113 may be supported by a flat surface, so that the second surface 113 remains a flat surface after the pressing step is completed. During the subsequent splitting step, the second surface 113 is then pressed by the annular material-extrusion die 7000, so as to form the material-extrusion groove 111.

The process of forming the material-extrusion groove 111 by the annular material-extrusion die 7000 is the same as described above, and will not be repeated here.

In addition to forming the material-extrusion groove 111 in the splitting step as described above, the material-extrusion groove 111 may also be formed in the pressing step.

Specifically, as shown in FIG. 6E, in some embodiments, after the punching step and before the splitting step, the method further includes:
Step S400' (Pressing): supporting the position of the second surface 113 surrounding the cylindrical protrusion 4200, stamping the annular end surface 4240 toward second surface 113, so as to reduce the radius of the transition rounded corner 4230 while forming the material-extrusion groove 111 on the second surface 113.

In this embodiment, during the pressing step, the second surface 113 is supported by the annular material-extrusion die 7000, at which point the transition rounded corner 4230 is located within an inner bore of the annular material-extrusion die 7000.

When the annular end surface 4240 is pressed by the annular pressing die 6000, a material in the cylindrical protrusion 4200 is filled into the transition rounded corner 4230, and the radius of the transition rounded corner 4230 is correspondingly reduced, and a portion of the material may protrude beyond the second surface 113 within the inner bore of the annular material-extrusion die 7000. Meanwhile, the annular material-extrusion die 7000 utilizes the downward pressing force applied to the plate member 4000 at the bottom of the plate member 4000 to effect reverse extrusion on the second surface 113. A portion of the annular material-extrusion die 7000 in contact with the second surface 113 forms the recessed material-extrusion groove 111.

It should be noted that if the material-extrusion groove 111 is formed in the pressing step, then during the subsequent splitting step, if an inner wall of the material-extrusion groove 111 does not receive support, deformation may occur.

In order to avoid the above-mentioned problem, as shown in FIG. 6G, the splitting step includes:
When stamping the portion of the cylindrical protrusion 4200 adjacent to the cylindrical inner wall 4210, the material-extrusion groove 111 is filled and supported by a die matching the second surface 113.

During the splitting step, a flat portion of a supporting die 10000 may support the second surface 113 on an outer side of the material-extrusion groove 111. Concurrently, the supporting die 10000 may be inserted into the material-extrusion groove 111 at a position corresponding to the material-extrusion groove 111, and reliably support an inner surface of the material-extrusion groove 111, so as to prevent the material-extrusion groove 111 from deforming when the protruding extrusion die 8000 presses the cylindrical protrusion 4200.

In addition, a position of the supporting die 10000 corresponding to the cylindrical protrusion 4200 is recessed downward, so as to prevent the supporting die 10000 from interfering with the second fixing portion 130 that protrudes downward beyond the second surface 113.

As shown in FIG. 6F, in some embodiments, the splitting step includes:
When stamping the portion of the cylindrical protrusion 4200 adjacent to the cylindrical inner wall 4210, the first anti-rotation structure 150 is formed on an inner surface of the first fixing portion 120.

FIG. 6F illustrates an example in which the first anti-rotation structure 150 is a groove, and a protrusion structure may also be disposed on a circumferential sidewall of the protruding extrusion die 8000. When the protruding extrusion die 8000 presses the portion of the cylindrical protrusion 4200 adjacent to the cylindrical inner wall 4210, a structure protruding from the circumferential sidewall of the protruding extrusion die 8000 may press the unpressed first fixing portion 120, and the pressed portion of the material shrinks or moves downward, so as to form a groove serving as the first anti-rotation structure 150 on the inner surface of the first fixing portion 120.

In this embodiment, the second fixing portion 130, the first fixing portion 120, the transition portion 160, the material-extrusion groove 111, and the first anti-rotation structure 150 may be completed simultaneously, which helps simplify the manufacturing process of the lid 100, reduce manufacturing costs, and improve manufacturing efficiency.

Of course, in addition to the above-mentioned method of forming the first anti-rotation structure 150, the first fixing portion and the first anti-rotation structure 150 may also be formed in separate steps.

Specifically, as shown in FIG. 6G and FIG. 6H, in some embodiments, the first fixing portion 120 includes the first end 122 away from the plate member 4000; and the manufacturing method of the lid assembly 1000 further includes:
Pressing the first end 122 toward the second surface 113, so as to form the first anti-rotation structure 150 on the inner surface of the first fixing portion 120.

As shown in FIG. 6G, when the first fixing portion 120 is formed, the inner surface of the first fixing portion 120 may be a cylindrical surface. As shown in FIG. 6H, thereafter, the first fixing portion 120 is pressed by an anti-rotation molding die 11000. A circumferential surface of a cylindrical body of the anti-rotation molding die 11000 fits the inner surface of the first fixing portion 120, and a protrusion structure is formed on the circumferential surface of the cylindrical body, and the protrusion structure is provided to press the first end 122, so as to form a groove serving as the first anti-rotation structure 150 on the inner surface of the first fixing portion 120.

It should be noted that when the first anti-rotation structure 150 is a protrusion, a partial region of the first end 122 may be pressed by a die, and the unpressed portion forms a protrusion serving as the first anti-rotation structure 150.

As shown in FIG. 6A, FIG. 6B, and FIG. 6C, in some embodiments, the punching step includes:
Stamping the edge of the through-hole 4100 at least twice in a direction from the second surface 113 to the first surface 112, so as to gradually increase the diameter of the through-hole 4100 and form the cylindrical protrusion 4200 protruding from the first surface 112.

Specifically, as shown in FIG. 6B, a hole-expanding die 5000 with an outer diameter slightly larger than the current diameter of the through-hole 4100 is first provided to insert into the through-hole 4100 from the second surface 113, so as to press the wall of the through-hole 4100, causing a pressed portion of the plate member 4000 to protrude toward the first surface 112. Meanwhile, the diameter of the through-hole 4100 also increases under the action of the hole-expanding die 5000.

When the hole-expanding die 5000 presses the plate member 4000, an annular limiting die 12000 surrounding the through-hole 4100 may be disposed on the first surface 112, and the annular limiting die 12000 may limit an outer edge of the portion protruding toward the first surface 112, so as to prevent the portion from bending outward.

As shown in FIG. 6C, the hole-expanding die 5000 with a larger outer diameter is provided to insert into the through-hole 4100 that has been reamed once from the second surface 113, and the wall of the through-hole 4100 is pressed again, so as to cause the pressed portion of the plate member 4000 to continue to protrude toward the first surface 112. Meanwhile, an outer diameter of a protrusion and a diameter of the through-hole 4100 are further increased.

The hole-expanding die 5000 with a gradually increasing outer diameter may be provided to perform the above operation multiple times, until a protrusion forms the cylindrical protrusion 4200 with both an outer diameter and an inner diameter meeting the preset dimensions. The cylindrical protrusion 4200 extends from the plate member 4000 in the thickness direction thereof away from the first surface 112.

As shown in FIG. 6I, FIG. 6J, and FIG. 6K, in some embodiments, the first fixing portion 120 includes the first end 122 away from the plate member 4000. The method of manufacturing the lid assembly 1000 further includes:
Pressing the first end 122 toward the second surface 113, so as to cause the first end 122 to bend toward a centerline of the first fixing portion 120.

As shown in FIG. 6I, for the cylindrical first fixing portion 120, the first end 122 is first pressed by a bending die 9000. The bending die 9000 has a conical surface 9100. During the first pressing, an angle β between the conical surface 9100 and a vertical direction is relatively small, so that the vertical first end 122 gathers and inclines toward a central axis of the first fixing portion 120 under the pressing action of the conical surface 9100.

As shown in FIG. 6J, for the first fixing portion 120 that has been pressed once, the bending die 9000 having the conical surface 9100 with the larger angle β may be provided to continue pressing the first end 122, so as to cause the first end 122 to further gather and incline under the pressing action of the conical surface 9100.

After multiple rounds of the above pressing, as shown in FIG. 6K, a flat die may finally be provided to press the first fixing portion 120, so as to cause a portion of the first fixing portion 120 adjacent to the first end 122 to bend toward the centerline of the first fixing portion 120.

As shown in FIG. 6L, in some embodiments, the first fixing portion 120 and the second fixing portion 130 define an accommodating space 140. The method of manufacturing the lid assembly 1000 further includes:
Fixing the terminal 200 fitted with the sealing portion 710 in the accommodating space 140.

After the lid 100 is formed, the terminal 200 fitted with the sealing portion 710 may be inserted into the accommodating space 140, and the second fixing portion 130 limits part of the structure of the terminal 200, preventing the terminal 200 from passing through an inner bore defined by the second fixing portion 130 and disengaging from the accommodating space 140.

Based on the same inventive concept, in combination with the description of the method of manufacturing the lid assembly 1000 in each of the above embodiments, the present embodiment provides the lid assembly 1000, which has the technical effects corresponding to the method of manufacturing the lid assembly 1000 in each of the above embodiments, and details are not repeated here.

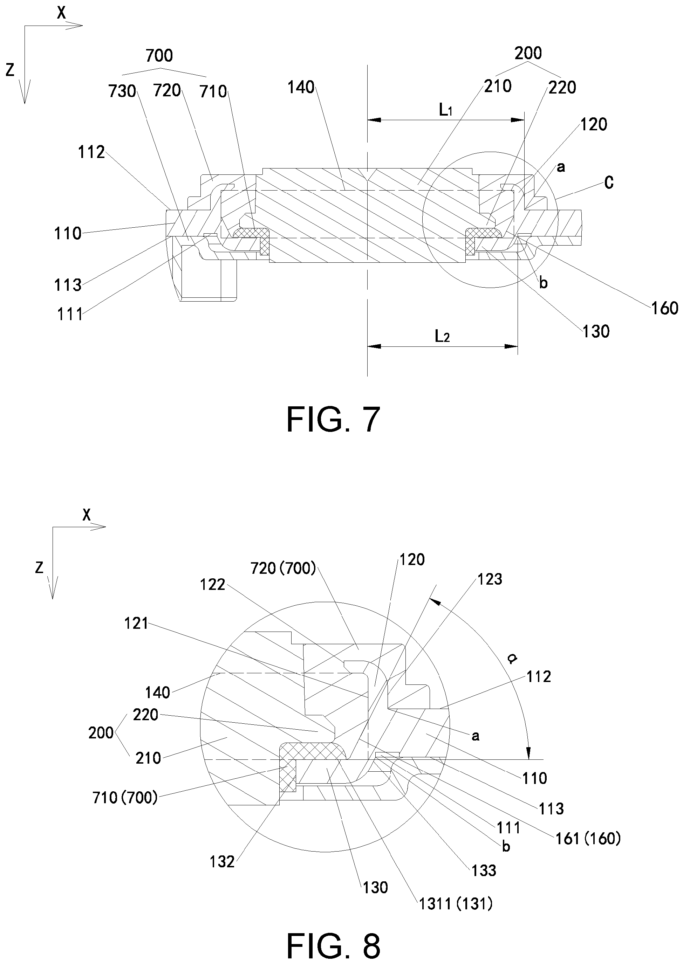

FIG. 7 shows an enlarged view of the portion B in FIG. 3 of the lid assembly 1000 of the third structure, and FIG. 8 shows an enlarged view of a portion C in FIG. 7.

As shown in FIG. 7 and FIG. 8, in some embodiments, the lid assembly 1000 includes the lid 100. The lid 100 includes the lid base 110, the first fixing portion 120, and the second fixing portion 130. The lid base 110 includes the first surface 112 and the second surface 113 disposed opposite to each other along the first direction (such as the direction Z in FIG. 7). The first fixing portion 120 extends from the first surface 112 at least along the first direction away from the lid base 110. The second fixing portion 130 extends from the second surface 113 along the first direction and the second direction (such as the direction X in FIG. 7) away from the lid base 110. The first fixing portion 120 includes a first inner wall 121. The second fixing portion 130 includes a second inner wall 132. The first inner wall 121 and the second inner wall 132 and the transition portion 160 connecting the first inner wall 121 and the second inner wall 132 form the accommodating space 140. The first direction is a centerline direction of the accommodating space 140, and the second direction is perpendicular to the first direction.

Disposing the transition portion 160 connected to the first inner wall 121 and the second inner wall 132 in the lid 100 has the same advantageous effects as the advantageous effects of disposing the transition portion 160, and details are not repeated here.

As shown in FIG. 8, in some embodiments, the transition portion 160 includes an inclined surface, an arc surface, or a stepped surface connected to the first inner wall 121 and the second inner wall 132, respectively.

In combination with the foregoing, when the transition portion 160 having the inclined surface, the arc surface, or the stepped surface is disposed between the first inner wall 121 and the second inner wall 132, compared to the right-angle structure shown by the dashed line in FIG. 8, the transition portion 160 has a more pronounced material accumulation effect, which helps improve the structural strength at the junction between the second fixing portion 130 and the lid base 110, and improves the connection reliability between the second fixing portion 130 and the lid base 110.

As shown in FIG. 8, in some embodiments, the transition portion 160 includes an annular inclined surface 161, and the second inner wall 132 includes an annular plane 131 disposed parallel to the second surface 113. The angle formed between the annular inclined surface 161 and the annular plane 131 is α, where 45°≤α<90°.

By way of example, the annular inclined surface 161 may be a smooth surface free of protrusions or recesses, or the annular inclined surface 161 may be an uneven surface that is, at least partially, provided with protrusions or recesses.

Exemplarily, α may be 45°, 50°, 55°, 60°, 65°, 70°, 75°, 80°, or 85°.

In combination with the foregoing, the second fixing portion 130 and the transition portion 160 may be formed by stamping with a mold. After both are formed, the annular inclined surface 161 may allow the mold to separate from the lid 100 more easily, which helps reduce the difficulty of forming the lid 100 and improve the forming efficiency.

By way of example, reference is made to the structure and orientation illustrated in FIG. 8. If α is excessively large, the extent to which a lower end of the transition portion 160 extends to the second fixing portion 130 is reduced, such that the transition portion 160 provides only a limited reinforcing effect at the second connecting portion. Conversely, if α is excessively small, since the diameter of the accommodating space 140 and the position of the first fixing portion 120 are fixed, the transition portion 160 will unduly encroach upon the installation space of the annular plane 131, which may adversely affect the effect of sealing the terminal 200 and the lid 100.

To avoid the foregoing issues, in this embodiment the angle α is specified such that 45°≤α<90°. This configuration both ensures that the transition portion 160 may provide effective reinforcement at the junction between the second fixing portion 130 and the lid base 110, thereby ensuring the connection strength between the second fixing portion 130 and the lid base 110, and ensures that the annular planar surface 131 has a relatively large area, thereby providing a sufficient contact area for a sealing structure (e.g., the sealing portion 710) so as to achieve a relatively reliable sealing performance.

As shown in FIG. 7 and FIG. 8, in some embodiments, along the second direction, the first fixing portion 120 includes a first outer side wall 123 away from the accommodating space 140, and the second fixing portion 130 includes a second outer side wall 133 away from the accommodating space 140. The first outer side wall 123 is connected with the first surface 112 and forms the first connecting portion a, and the second outer side wall 133 is connected with the second surface 113 and forms a second connecting portion b. Along the second direction, a straight-line distance from the first connecting portion a to a centerline of the accommodating space 140 is L₁, a straight-line distance from the second connecting portion b to the centerline of the accommodating space 140 is L₂, and L₂<L₁.

Exemplarily, the first outer side wall 123 and the second outer side wall 133 are both disposed around the centerline of the terminal 200. Correspondingly, the first connecting portion a is a closed circle or polygon, and the second connecting portion b is also a closed circle or polygon.

It should be noted that the terminal 200 includes a columnar terminal body 210 and a protrusion 220 protruding from the terminal body 210 along the second direction. The protrusion 220 may be disposed around a circumferential sidewall of the terminal body 210, and the circumferential sidewall of the terminal body 210 is disposed around the centerline of the terminal 200.

To enable the terminal 200, after formation of the first fixing portion 120 and the second fixing portion 130, to pass smoothly through an inner bore defined by the first fixing portion 120, a diameter of the inner bore defined by the first fixing portion 120 may be set to be greater than an outer diameter of the protrusion 220. Conversely, because the second fixing portion 130 is required to restrict the terminal 200 along the first direction, a diameter of an inner bore defined by the second fixing portion 130 is to be designed to be smaller than the outer diameter of the protrusion 220.

Specifically, as shown in FIG. 8, along the second direction, the first fixing portion 120 is located on a side of the terminal 200 away from the centerline of the terminal 200, while the second fixing portion 130 needs to spatially overlap with a partial structure (for example, the protrusion 220) of the terminal 200 in order to limit the terminal 200. Therefore, along the second direction, the second fixing portion 130 may be located adjacent to the centerline of the terminal 200 to ensure that the second fixing portion 130 may reliably limit the terminal 200, while the first fixing portion 120 may be located farther from the centerline of the terminal 200 to prevent the first fixing portion 120 from obstructing the terminal 200 from entering the accommodating space 140.

Concurrently, the first connecting portion a and the second connecting portion b are disposed offset from each other along the second direction, which may also avoid stress concentration in the lid base 110 caused by the alignment of the first connecting portion a and the second connecting portion b, and helps to form a reliable connection between the first fixing portion 120, the second fixing portion 130, and the lid base 110.

As shown in FIG. 8, in some embodiments, the second surface 113 is provided with the material-extrusion groove 111 surrounding the second fixing portion 130, and along the second direction, the material-extrusion groove 111 extends to the second connecting portion b.

Exemplarily, the material-extrusion groove 111 is an annular groove surrounding the second fixing portion 130.

Combined with the foregoing, when forming the lid 100, the second surface 113 may be compressed to form the material-extrusion groove 111. After the material-extrusion groove 111 is formed, the material at the original position of the material-extrusion groove 111 is pressed to move toward adjacent positions, thereby improving the structural strength of the structures at the positions adjacent to the material-extrusion groove 111.

Taking the structure and direction shown in FIG. 8 as an example, the second fixing portion 130 is located on a left side of the material-extrusion groove 111, and the two are adjacent to each other. Therefore, after the material-extrusion groove 111 is formed, the material at the original position of the material-extrusion groove 111 moves toward the junction between the second fixing portion 130 and the lid base 110, thereby helping to improve the structural strength at the junction between the second fixing portion 130 and the lid base 110, and helping to prevent fracture at the second connecting portion b.

As shown in FIG. 8, in some embodiments, along the first direction, the projection of the first connecting portion a on the second surface 113 is located within the material-extrusion groove 111.

Still taking the structure and direction shown in FIG. 8 as an example, the first fixing portion 120 is located above the material-extrusion groove 111, and the two are adjacent to each other. Therefore, after the material-extrusion groove 111 is formed, the material at the original position of the material-extrusion groove 111 moves toward the junction between the first fixing portion 120 and the lid base 110, thereby helping to improve the structural strength at the junction between the first fixing portion 120 and the lid base 110, and helping to prevent fracture at the first connecting portion a.

As shown in FIG. 7 and FIG. 8, in some embodiments, the first fixing portion 120 includes the first end 122 away from the lid base 110, and a portion of the first fixing portion 120 adjacent to the first end 122 extends in the first direction.

A portion of the first fixing portion 120 adjacent to the lid base 110 extends in the first direction away from the lid base 110, and a portion adjacent to the first end 122 extends toward the centerline of the terminal 200, that is, the first fixing portion 120 has a bent structure.

A portion of the first fixing portion 120 adjacent to the first end 122 may limit the structural members (for example, a portion of the insulating and sealing structure 700) within the accommodating space 140 in the first direction, which helps to maintain the above-mentioned structural members more stably within the accommodating space 140, and helps to form a more stable and reliable insulating and sealing junction between the terminal 200 and the lid 100.

As shown in FIG. 7 and FIG. 8, in some embodiments, the first fixing portion 120, the lid base 110, and the second fixing portion 130 are integrally formed and connected.

The advantageous effects of the first fixing portion 120, the lid base 110, and the second fixing portion 130 being integrally formed and connected are the same as the advantageous beneficial effects of the three being integrally formed and connected, and will not be repeated here.

As shown in FIG. 7 and FIG. 8, in some embodiments, the lid assembly 1000 includes the terminal 200 and the insulating and sealing structure 700, and the lid 100 and the terminal 200 are connected through the insulating and sealing structure 700. The insulating and sealing structure 700 includes an upper insulating portion 720 and the sealing portion 710, and the upper insulating portion 720 and the sealing portion 710 are connected within the accommodating space 140 and completely fill the accommodating space 140.

Exemplarily, the sealing portion 710 may be fitted over the terminal body 210 and disposed surrounding a circumference of the terminal body 210.

Exemplarily, a material of the sealing portion 710 may include elastic insulating materials, for example, rubber or plastic.

Exemplarily, the upper insulating portion 720 may be formed by injection molding of an insulating material.

Taking the structure and direction shown in FIG. 8 as an example, a lower surface of the protrusion 220 and the second inner wall 132 may cooperate with each other to jointly compress the sealing portion 710 located therebetween, so that this part of the sealing portion 710 is deformed under pressure to achieve a sealing effect. After the sealing portion 710 is deformed under pressure, an upper end thereof may extend between the protrusion 220 and the transition portion 160, and a lower end thereof may extend out of the accommodating space 140.

The sealing portion 710 extending between the protrusion 220 and the transition portion 160 may increase a contact area between the sealing portion 710 and an inner wall of the accommodating space 140, which helps improve the sealing performance of the sealing portion 710, and may also form an insulating isolation between the protrusion 220 and the transition portion 160 through the sealing portion 710 to prevent the protrusion 220 and the transition portion 160 from contacting each other, which helps improve the insulation reliability between the terminal 200 and the lid 100.

As can be seen from FIG. 7 and FIG. 8, the majority of the terminal 200 is located within the accommodating space 140. When the upper insulating portion 720 and the sealing portion 710 are connected within the accommodating space 140 and fill the accommodating space 140, the continuous insulating and sealing structure 700 with a specific width (dimension along the second direction) is formed between the terminal 200 and the inner wall of the accommodating space 140. This part of the insulating and sealing structure 700 not only has a high structural strength, which may ensure a stable and reliable connection between the terminal 200 and the lid 100, but also has insulating properties, which may enable reliable insulation between the terminal 200 and the lid 100, and further fills the gaps within the accommodating space 140 so that the electrolyte in the cell cannot leak outward through the accommodating space 140, thereby helping to improve the safety performance of the cell.

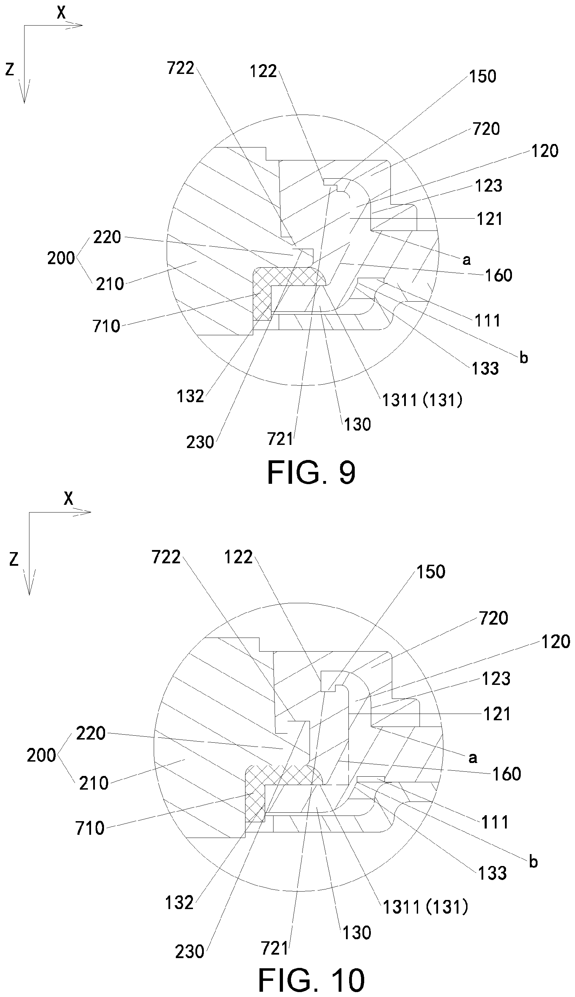

FIG. 9 shows an enlarged view of a fourth structure of the portion C in FIG. 5, and FIG. 10 shows an enlarged view of a fifth structure of the portion C in FIG. 5.

As shown in FIG. 7 and FIG. 8, in some embodiments, the first fixing portion 120 is provided with the first anti-rotation structure 150, and the upper insulating portion 720 is formed with a first insulating and anti-rotation structure 721. One of the first anti-rotation structure 150 and the first insulating and anti-rotation structure 721 is a groove structure, and the other is a protrusion structure fitted within the groove structure; and/or, the terminal 200 is provided with a second anti-rotation structure 230, and the upper insulating portion 720 is formed with a second insulating and anti-rotation structure 722. One of the second anti-rotation structure 230 and the second insulating and anti-rotation structure 722 is a groove structure, and the other is a protrusion structure fitted within the groove structure.

Exemplarily, a plurality of the first anti-rotation structure 150 are provided and arranged at intervals around the centerline of the terminal 200.

Exemplarily, the upper insulating portion 720 may be formed through injection molding. During injection molding, if the first anti-rotation structure 150 is a protrusion, the injection molding material wraps around the protrusion and forms a groove after curing. If the first anti-rotation structure 150 is a groove, the injection molding material fills the groove and forms a protrusion after curing.

Exemplarily, a plurality of the second anti-rotation structure 230 are provided and arranged at intervals around the centerline of the terminal 200.

Exemplarily, the upper insulating portion 720 may be formed through injection molding. During injection molding, if the second anti-rotation structure 230 is a protrusion, the injection molding material wraps around the protrusion and forms a groove after curing. If the second anti-rotation structure 230 is a groove, the injection molding material fills the groove and forms a protrusion after curing.

It should be noted that, as shown in FIG. 7, the first anti-rotation structure 150 is a groove, and the first insulating and anti-rotation structure 721 is a protrusion fitted within the groove. As shown in FIG. 8, the first insulating and anti-rotation structure 721 is a groove, and the first anti-rotation structure 150 is a protrusion fitted within the groove.

When the first anti-rotation structure 150 is engaged in an interfitting manner with the first insulating and anti-rotation structure 721, a reliable connection is thereby ensured between the upper insulating portion 720 and the first fixing portion 120, preventing any relative displacement or rotation therebetween. In light of the foregoing, the terminal 200 is connected to the first fixing portion 120 of the lid 100 via the upper insulating portion 720. Accordingly, when relative rotation between the upper insulating portion 720 and the first fixing portion 120 is precluded, a stable connection between the terminal 200 and the lid 100 is likewise ensured, thereby preventing relative torsion between them.

In a cell employing the lid assembly 1000 of this embodiment, once the cell is secured, the lid 100 is correspondingly secured. By virtue of the upper insulating portion 720, the terminal 200 and the lid 100 are maintained substantially stationary relative to one another, thereby precluding relative torsion. Accordingly, the terminal 200 establishes a reliable connection with an external circuit and applies reliable compressive force to the sealing portion 710, thereby preventing failure of the sealing portion 710 and avoiding leakage of electrolyte from the interior of the cell.

It should be noted that, as shown in FIG. 7, the second insulating and anti-rotation structure 722 is a groove, and the second anti-rotation structure 230 is a protrusion fitted within the groove. As shown in FIG. 8, the second anti-rotation structure 230 is a groove, and the second insulating and anti-rotation structure 722 is a protrusion fitted within the groove.

The advantageous effects of the second anti-rotation structure 230 and the second insulating and anti-rotation structure 722 being fitted and connected are similar to the aforementioned advantageous effects of the first anti-rotation structure 150 and the first insulating and anti-rotation structure 721 being fitted and connected, and thus will not be repeated here.

Based on the same inventive concept, in combination with the description of the lid assembly 1000 of each of the above embodiments, the present embodiment provides a cell, which has the corresponding advantageous effects of the lid assembly 1000 of each of the above embodiments, and thus will not be repeated here.

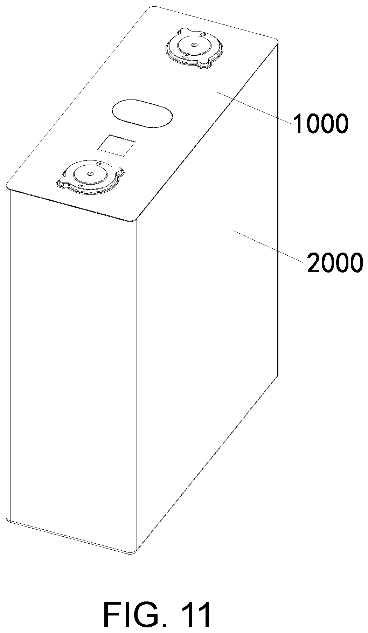

FIG. 11 is a schematic diagram of a cell of an embodiment of the present disclosure.

As shown in FIG. 11, the cell includes the housing 2000, the electrode assembly 3000, and the lid assembly 1000 as described in each of the above embodiments, wherein the lid assembly 1000 is connected to the housing 2000, and the electrode assembly 3000 is disposed within the space defined by the lid assembly 1000 and the housing 2000.

It should be noted that an end of the terminal 200 of the lid assembly 1000 that is adjacent to the electrode assembly 3000 may extend out of the insulating and sealing structure 700 (i.e., extend out of the lower insulating portion 730), and be exposed within the space where the electrode assembly 3000 is located, so as to facilitate the electrical connection between the terminal 200 and the tab of the electrode assembly 3000.

## Claims

1. A method for manufacturing a lid assembly (1000), comprising:
a hole-forming step: providing a plate member (4000) and forming, in the plate member (4000), a through-hole (4100), wherein the through-hole (4100) extends, along a thickness direction of the plate member (4000), through a first surface (112) and a second surface (113) of the plate member (4000);
a punching step: pressing an edge of the through-hole (4100) in a direction from the second surface (113) toward the first surface (112) to form a cylindrical protrusion (4200) protruding from the first surface (112), wherein the cylindrical protrusion (4200) comprises a cylindrical inner wall (4210), a cylindrical outer wall (4220), and an annular end surface (4240) respectively connected to the cylindrical inner wall (4210) and the cylindrical outer wall (4220);
a splitting step: stamping, from the annular end surface (4240) toward the second surface (113), a portion of the cylindrical protrusion (4200) adjacent to the cylindrical inner wall (4210) so as to form a second fixing portion (130) that protrudes beyond the second surface (113), wherein a portion of the cylindrical protrusion (4200) adjacent to the cylindrical outer wall (4220) forms a first fixing portion (120), and an inner wall of the first fixing portion (120) and an inner wall of the second fixing portion (130) are connected by a transition portion (160).

2. The method for manufacturing the lid assembly (1000) according to claim 1, wherein the cylindrical outer wall (4220) is connected to the first surface (112) and forms a first connecting portion (a);
the splitting step further comprising:
when stamping the portion of the cylindrical protrusion (4200) adjacent to the cylindrical inner wall (4210), supporting, on the second surface (113), a location surrounding the cylindrical protrusion (4200) so as to form, on the second surface (113), a material-extrusion groove (111), wherein in the thickness direction of the plate member (4000), a projection of the first connecting portion (a) onto the second surface (113) is positioned within the material-extrusion groove (111).

3. The method for manufacturing the lid assembly (1000) according to claim 1, wherein a transition rounded corner (4230) is formed between the cylindrical inner wall (4210) and the second surface (113);
after the punching step, and before the splitting step, the method further comprising:
a pressing step, supporting a position of the second surface (113) surrounding the cylindrical protrusion (4200), stamping the annular end surface (4240) toward the second surface (113), so as to reduce a radius of the transition rounded corner (4230) while forming a material-extrusion groove (111) on the second surface (113).

4. The method for manufacturing the lid assembly (1000) according to claim 3, wherein the splitting step comprises:
when stamping the portion of the cylindrical protrusion (4200) adjacent to the cylindrical inner wall (4210), filling and supporting the material-extrusion groove (111) through a mold matching the second surface (113).

5. The method for manufacturing the lid assembly (1000) according to claim 1, wherein the splitting step comprises:
when stamping the portion of the cylindrical protrusion (4200) adjacent to the cylindrical inner wall (4210), forming a first anti-rotation structure (150) on an inner surface of the first fixing portion (120).

6. The method for manufacturing the lid assembly (1000) according to claim 1, wherein the first fixing portion (120) comprises a first end (122) away from the plate member (4000), the method for manufacturing the lid assembly (1000) further comprises:
compressing the first end (122) toward the second surface (113), so as to bend the first end (122) toward a centerline of the first fixing portion (120).

7. The method for manufacturing the lid assembly (1000) according to claim 1, wherein the first fixing portion (120) and the second fixing portion (130) define an accommodating space (140), the method for manufacturing the lid assembly (1000) further comprises:
fixing a terminal (200) fitted with a sealing portion (720) in the accommodating space (140).

8. A lid assembly (1000), comprising a lid (100);
wherein the lid (100) comprises a lid base (110), a first fixing portion (120), and a second fixing portion (130), the lid base (110) comprises a first surface (112) and a second surface (113) disposed opposite to each other along a first direction, the first fixing portion (120) extends from the first surface (112) at least along the first direction away from the lid base (110), the second fixing portion (130) extends from the second surface (113) along the first direction and a second direction away from the lid base (110);
the first fixing portion (120) comprises a first inner wall (121), the second fixing portion (130) comprises a second inner wall (132), the first inner wall (121) and the second inner wall (132) and a transition portion (160) connecting the first inner wall (121) and the second inner wall (132) form an accommodating space (140), the first direction is a centerline direction of the accommodating space (140), and the second direction is perpendicular to the first direction.

9. The lid assembly (1000) according to claim 8, wherein the transition portion (160) comprises an inclined surface, an arc surface, or a stepped surface connected to the first inner wall (121) and the second inner wall (132) respectively.

10. The lid assembly (1000) according to claim 12, wherein along the second direction, the first fixing portion (120) comprises a first outer side wall (123) away from the accommodating space (140), the second fixing portion (130) comprises a second outer side wall (133) away from the accommodating space (140), the first outer side wall (123) is connected to the first surface (112) and forms a first connecting portion (a), the second outer side wall (133) is connected to the second surface (113) and forms a second connecting portion (b);
along the second direction, a straight-line distance from the first connecting portion (a) to a centerline of the accommodating space (140) is L₁, and a straight-line distance from the second connecting portion (b) to the centerline of the accommodating space (140) is L₂, L₂<L₁.

11. The lid assembly (1000) according to claim 10, wherein the second surface (113) is provided with a material-extrusion groove (111) surrounding the second fixing portion (130), along the second direction, the material-extrusion groove (111) extends to the second connecting portion (b);
along the first direction, a projection of the first connecting portion (a) on the second surface (113) is located within the material-extrusion groove (111).

12. The lid assembly (1000) according to claim 8, wherein the first fixing portion (120) comprises a first end (122) away from the lid base (110), and a portion of the first fixing portion (120) adjacent to the first end (122) extends in the first direction;
the first fixing portion (120), the lid base (110), and the second fixing portion (130) are integrally formed and connected.

13. The lid assembly (1000) according to claim 8, comprising a terminal (200) and an insulating and sealing structure (700), and the lid (100) and the terminal (200) are connected through the insulating and sealing structure (700),
wherein the insulating and sealing structure (700) comprises an upper insulating portion (720) and a sealing portion (720), the upper insulating portion (720) and the sealing portion (720) are connected within the accommodating space (140) and completely fill the accommodating space (140).

14. The lid assembly (1000) according to claim 13, wherein the first fixing portion (120) is provided with a first anti-rotation structure (150), and the upper insulating portion (720) is formed with a first insulating and anti-rotation structure (721), one of the first anti-rotation structure (150) and the first insulating and anti-rotation structure (721) is a groove structure, and the other is a protrusion structure fitted within the groove structure; and/or,
the terminal (200) is provided with a second anti-rotation structure (230), and the upper insulating portion (720) is formed with a second insulating and anti-rotation structure (722), one of the second anti-rotation structure (230) and the second insulating and anti-rotation structure (722) is a groove structure, and the other is a protrusion structure fitted within the groove structure.

15. A cell, comprising a housing (2000), an electrode assembly (3000), and the lid assembly (1000) according to claim 8, wherein the lid assembly (1000) is connected to the housing (2000), and the electrode assembly (3000) is disposed within a space defined by the lid assembly (1000) and the housing (2000).
